# EUROPÄISCHE PATENTANMELDUNG

(11) **EP 2 672 111 A2**
(43) Veröffentlichungstag der Anmeldung: **11.12.2013**
(21) Anmeldenummer: 13159099.4
(22) Anmeldetag: 14.03.2013
(51) Int. Cl.: F03D 7/02, F03D 7/04

(54) **Zielwertabhängige Steuerung eines Windparks**

(30) Priorität: 06.06.2012 DE 102012011210
(71) Anmelder: RWE Innogy GmbH, 45127 Essen (DE)
(72) Erfinder: Koch, Dr. Friedrich, 47623 Kevelaer (DE); Schierenbeck, Olaf, 21220 Seevetal (DE); Schöppenthau, Kai, 21220 Seevetal (DE)
(74) Vertreter: Cohausz & Florack

(57) **Zusammenfassung**

Verfahren zur Steuerung zumindest einer Windkraftanlage 2 bei dem für einen vorbestimmten Zeitraum prognostizierte Wetterdaten 16, 18, 20 erfasst werden, mit den prognostizierten Wetterdaten 16, 18, 20 ein Energieertrag 28 der Windkraftanlage 2 innerhalb des Zeitraums berechnet wird, wobei der Energieertrag 28 für zumindest zwei verschiedene Sätze von Einstellungsparametern c, d der Windkraftanlage 2 berechnet wird. Zur Optimierung der Netzleistung wird vorgeschlagen, dass die Windkraftanlage 2 mit dem Satz von Einstellungsparametern c, d betrieben wird, bei denen der errechnete Energieertrag 28 den geringsten Abstand von einem Zielwert für den Energieertrag 28 hat.

## Beschreibung

Der Gegenstand betrifft ein Verfahren zur Steuerung zumindest einer Windkraftanlage sowie eine Windkraftanlagensteuervorrichtung.

Mit zunehmender Gewinnung elektrischer Energie aus regenerativen Quellen wird die Frage der Netzstabilität immer bedeutsamer. Das elektrische Leistungsnetz muss stets die abgerufene elektrische Leistung zur Verfügung stellen. Hierzu ist es notwendig, die Energieerzeugung an die Nachfrage anzupassen. So ist es beispielsweise wenig sinnvoll, zu Nachtzeiten große Mengen elektrischer Energie mit Windkraftanlagen zu erzeugen, da diese großen Mengen elektrischer Energie nicht abgerufen werden. Andererseits ist es für die Netzplanung aber notwendig, dass Windkraftanlagen zu Lastspitzenzeiten auch tatsächlich die elektrische Leistung in das Stromnetz einspeisen, die notwendig ist.

Dazu ist es bei der Bedarfsplanung notwendig, zu prognostizieren, welche elektrische Leistung eine Windkraftanlage zu einem bestimmten Zeitpunkt liefert. Darüber hinaus ist es notwendig, den Energieertrag einer Windkraftanlage innerhalb eines Zeitraums zu prognostizieren.

Auf der anderen Seite dürfen Windkraftanlagen jedoch nicht beliebig elektrische Leistung in das Stromnetz einspeisen, da das Stromnetz zum Einen nur für eine bestimmte elektrische Leistung ausgelegt ist und zum Anderen der eingespeisten Leistung eine elektrische Last gegenüberstehen muss. Dies macht es für Betreiber von Windparks und Windkraftanlagen notwendig, im Voraus einen Energieertrag für einen bestimmten Zeitraum an den Netzbetreiber zu melden. Der Betreiber des Windparks ist angehalten, die gemeldete Energie auch tatsächlich in dem genannten Zeitraum zur Verfügung zu stellen. Gelingt dies nicht, oder wird zuviel Energie geliefert, wird dies teilweise pönalisiert.

Aus diesem Grunde ist der Betreiber des Windparks stets daran interessiert, den Energieertrag möglichst präzise zu steuern, so dass Zielwerte innerhalb eines bestimmten Zeitraums erreichbar sind.

Aus diesem Grunde lag dem Gegenstand die Aufgabe zugrunde, eine Windkraftanlage zur Erreichung eines Zielwertes einer zu liefernden Energie im Betrieb zu optimieren.

Diese Aufgabe wird durch ein Verfahren nach Anspruch 1 sowie eine Vorrichtung nach Anspruch 14 gelöst.

Dem Betreiber einer Windkraftanlage stehen für einen vorbestimmten Zeitraum Prognosen für Wetterdaten zur Verfügung. Diese Prognosen für Wetterdaten können Informationen zu Windgeschwindigkeiten und Windrichtungen enthalten. Diese Informationen können beispielsweise in einem Windrosendiagramm zur Verfügung gestellt werden. Darüber hinaus kann dem Betreiber der Windkraftanlage eine historische Information über Wetterdaten vorliegen, die beispielsweise eine Häufigkeitsverteilung einer Windgeschwindigkeit an einem bestimmten Windrad innerhalb eines bestimmten Zeitraums angibt. Diese Häufigkeitsverteilung kann auch aufgeschlüsselt nach Windrichtungen sein. Darüber hinaus können prognostizierte Wetterdaten auch eine Wettervorhersage beinhalten, die eine Vorhersage über Windgeschwindigkeit und Windrichtung in der Zukunft beinhalten.

In Kenntnis der prognostizierten Wetterdaten kennt der Betreiber der Windkraftanlage in etwa den Verlauf des Windes an der Windkraftanlage innerhalb des bestimmten Zeitraums. Dieser Zeitraum kann eine Stunde, mehrere Stunden, einen ganzen Tag, eine Woche oder auch einen Monat umfassen. Für den genannten Zeitraum kann ein Energieertrag der Windkraftanlage berechnet werden, indem angenommen wird, dass die prognostizierten Wetterdaten mit den tatsächlichen Wetterdaten übereinstimmen. In diesem Fall stellte sich an den Windkraftanlagen der Wind ein, der prognostiziert wurde. Bei bekannten Windverhältnissen kann jedoch für eine einzelne Windkraftanlage der Energieertrag berechnet werden. Auch ist es möglich, den Energieertrag eines Windparks bei bekannten Wetterverhältnissen zu bestimmen/errechnen.

Hierbei ist es beispielsweise möglich, neben den Wetterdaten auch noch Topologien des Windparks als auch die Rauhigkeit der Landschaft zu berücksichtigen. Darüber hinaus können weitere Wetterdaten, wie beispielsweise Wellengang, Turbulenzen, Scherwinde, Fall- und Steigwinde oder dergleichen einen Einfluss auf den Energieertrag einer Windkraftanlage und/oder eines Windparks haben.

All diese Informationen können aktuell gemessen werden und die aktuelle Leistung einer Windkraftanlage bestimmt werden. Andererseits ist es auch möglich, für diese Daten im Voraus für einen bestimmten Zeitraum Prognosen zu treffen und anhand dieser Prognosen abzuschätzen, welche Leistung eine Windkraftanlage bringt und somit den Energieertrag über den bestimmten Zeitraum zu berechnen.

Der Energieertrag ist darüber hinaus abhängig von Einstellparametern für die jeweilige Windkraftanlage. Bei einer einzelnen Windkraftanlage kann ein Einstellparameter zum Beispiel der Azimut sein. Ein anderer Einstellparameter kann beispielsweise der Pitch eines Rotorblatts sein. Abhängig von diesen Einstellparametern variiert die Leistung der Windkraftanlage bei gleichbleibenden Windverhältnissen. Somit ist es möglich, bei gegebenen Wetterverhältnissen die Windkraftanlage mit unterschiedlichen Einstellungen zu betreiben, was zu unterschiedlichen Leistungen führt. Über die Zeit führen die unterschiedlichen Leistungen zu verschiedenen Energieerträgen der Windkraftanlage.

Somit ist es möglich, den Energieertrag innerhalb des vorbestimmten Zeitraums in Voraus abzuschätzen. Dies erfolgt unter Zuhilfenahme der prognostizierten Wetterdaten als auch verschiedener Sätze von Einstellparametern.

Bei einer einzelnen Windkraftanlage können unterschiedliche Einstellungen von Azimut und Pitch zu unterschiedlichen Leistungen der Windkraftanlage führen, die zu unterschiedlichen Energieerträgen über den Zeitraum führen. Bei einem Windpark ist dabei zu berücksichtigen, dass die Windkraftanlagen untereinander sich beeinflussen. Diese Beeinflussungen können bei der Berechnung des Energieertrags berücksichtigt werden. Abhängig von den Wetterverhältnissen stellen sich unterschiedliche Grade der Beeinflussung ein. Außerdem ist der Grad der Beeinflussung eines ersten Windrads auf ein zweites Windrad abhängig auch von den Einstellparametern sowohl des ersten Windrads als auch des zweiten Windrads. Ein Beispiel hierfür kann eine Abschattung eines zweiten Windrads durch ein erstes Windrad sein. Diese Abschattung kann unter Anderem abhängig vom Azimut als auch von Pitch des ersten Windrads sein, so dass abhängig von den Einstellparametern für die jeweiligen Windkraftanlagen unterschiedliche Energieerträge des Windparks realisierbar sind.

Wie Eingangs erläutert, ist es für den Betreiber des Windparks notwendig, einen bestimmten Zielwert eines Energieertrags zu erreichen, da diese Energie in dem bestimmten Zeitraum eine Netzlast abdecken muss. Um den Energieertrag zu optimieren wird vorgeschlagen, dass die Windkraftanlage mit dem Satz von Einstellparametern betrieben wird, bei denen der errechnete Energieertrag den geringsten Abstand von einem Zielwert für den Energieertrag hat.

Es ist erkannt worden, dass über den Zeitraum unterschiedliche Einstellparameter der Windkraftanlagen gewählt werden können, die zusammen mit den prognostizierten Wetterdaten zu einem bestimmten Energieertrag führen. Auf das Wetter kann der Betreiber der Windkraftanlage keinen Einfluss nehmen. Der Betreiber der Windkraftanlage kann jedoch auf die Einstellungsparameter der Windkraftanlage Einfluss nehmen und somit den Energieertrag steuern. Durch diese Steuerung des Energieertrags ist es für den Betreiber der Windkraftanlage möglich, den Energieertrag an einen vorgegebenen Zielwert anzunähern. Dies führt zu einer erhöhten Netzstabilität, da Betreiber von Windkraftanlagen die von ihnen gemeldeten Energien in den genannten Zeiträumen auch tatsächlich liefern. Dadurch ist es für den Netzbetreiber möglich, verschiedenste Ressourcen so zu steuern, dass die Netzlast stets gedeckt ist.

Gemäß einem Ausführungsbeispiel wird vorgeschlagen, dass die prognostizierten Wetterdaten zumindest Informationen zu einer Windgeschwindigkeit und/oder einer Windrichtung an zumindest einer Windkraftanlage umfassen. Diese Informationen können zum Beispiel in einer Windrose aufgetragen werden. Diese beinhaltet Informationen zu der Windrichtung als auch der Windgeschwindigkeit. Die Windrose kann für verschiedene Zeiten angegeben werden.

Gemäß einem vorteilhaften Ausführungsbeispiel wird vorgeschlagen, dass die prognostizierten Wetterdaten aus historischen Wetterdaten ermittelt werden und/oder dass die prognostizierten Wetterdaten aus einer Wetterprognose berechnet werden. Anhand von historischen Wetterdaten ist es möglich, abzuschätzen, wie sich das Wetter in Zukunft entwickelt. So ist es beispielsweise möglich, über eine Häufigkeitsverteilung von Windgeschwindigkeiten über einen bestimmten Zeitraum auf zukünftige Windgeschwindigkeiten zu schließen. Eine Häufigkeitsverteilung kann beispielsweise für einen Tag, einer Woche, einen Monat oder ein Jahr vorliegen. Die Häufigkeitsverteilung wird vorzugsweise in einer Weibullkurve aufgetragen. Auch ist es möglich, dass Informationen zu Windrichtungen gespeichert werden. Anhand dieser historischen Wetterdaten ist es möglich, zu prognostizieren, wie sich das Wetter, insbesondere der Wind in dem vorbestimmten Zeitraum verhält und anhand dieser Informationen zu errechnen, wie groß der Energieertrag möglicherweise ist.

Auch ist es möglich, dass die prognostizierten Wetterdaten eine Wetterprognose enthalten. Aus der Wetterprognose können die Wetterdaten berechnet werden. Die Wetterprognose kann meteorologische Daten enthalten, aus der Wahrscheinlichkeiten für Windrichtung und Windgeschwindigkeit abgeleitet werden können. Mit Hilfe dieser Wetterprognose ist es möglich, abzuschätzen, wie sich der Wind an einer Windkraftanlage über einen bestimmten Zeitraum verhalten wird.

Gemäß einem Ausführungsbeispiel wird vorgeschlagen, dass die historischen Wetterdaten zumindest eine Häufigkeitsverteilung einer Windgeschwindigkeit einer Windkraftanlage umfassen. Die Häufigkeitsverteilung kann beispielweise in einem Weibulldiagramm aufgetragen werden. Hierbei können nicht nur Windgeschwindigkeit, sondern auch Windrichtung angegeben werden. Eine höhere Fehlertoleranz ist beispielsweise dadurch möglich, dass eine gemittelte Häufigkeitsverteilung einer Windgeschwindigkeit an einer Mehrzahl von Windkraftanlagen ermittelt wird. Dabei können Messwerte von einer Mehrzahl von Windkraftanlagen verwendet werden und daraus eine gemittelte Häufigkeitsverteilung errechnet werden.

Auch ist es möglich, dass die Windgeschwindigkeiten auf unterschiedlichen Höhen gemessen werden. Darüber hinaus ist es möglich, dass Wetterdaten von meteorologischen Messstationen verwendet werden, um die Häufigkeitsverteilungen zu ergänzen. Diese meteorologischen Messstationen können beispielsweise meteorologische Messmasten sein, die außerhalb eines Windparks angeordnet sind und vorzugsweise auf verschiedenen Höhen Windgeschwindigkeiten mit einem Anemometer messen. Auch diese Informationen können in die Häufigkeitsverteilung der Windgeschwindigkeit einfließen.

Gemäß einem vorteilhaften Ausführungsbeispiel wird vorgeschlagen, dass der Energieertrag mit Hilfe der prognostizierten Wetterdaten für verschiedene Sätze von Einstellungsparametern simuliert wird. Die Informationen zu Windgeschwindigkeit und Windrichtung werden aus den Wetterdaten ermittelt. Mit Hilfe dieser Informationen lässt sich für eine Windkraftanlage simulieren, bei welchen Einstellungen sie welchen Energieertrag liefert. Dies ist insbesondere dann von Vorteil, wenn die Simulation des Energieertrags über eine Mehrzahl von Windkraftanlagen erfolgen soll und dabei Abschattungsphänomene und sonstige Beeinflussungen der Windkraftanlagen untereinander berücksichtigt werden können. Mit Hilfe der Simulation lässt sich berechnen, wie sich der Energieertrag verändert, wenn die Einstellungsparameter für die verschiedenen Windräder variiert werden. Dadurch lässt sich eine Zielwerterreichung optimieren, indem die Einstellparameter für die verschiedenen Windkraftanlagen so gewählt werden, dass der Zielwert am Ende des Zeitraums für den Energieertrag möglichst erreicht ist.

Auch ist es möglich, dass aus historischen Daten der Energieertrag berechnet wird. Hierbei kann ermittelt werden, wie die Einstellungsparameter für eine Windkraftanlage bei bestimmten Wetterbedingungen waren, die den prognostizierten Wetterbedingungen entsprechen. Dann kann ermittelt werden, wie groß der Energieertrag der Windkraftanlage war. Diese historische Information kann dazu verwendet werden, abzuschätzen, wie groß der Energieertrag der Windkraftanlage bei der prognostizierten Wetterlage bei gleichen Einstellparametern ist, da anzunehmen ist, dass der Energieertrag bei identischen Wetterverhältnissen und identischen Einstellungsparametern nahezu identisch ist. Eine Kombination aus Simulation und Ableitung aus historischen Werten ist ebenfalls möglich. Hierbei können die historischen Werte mit den Simulationswerten gemittelt oder gewichtet gemittelt werden.

Häufig tritt der Fall auf, dass bei gleichen Wetterbedingungen unterschiedliche Einstellungsparameter für die Windkraftanlagen verwendet werden. Diese verschiedenen Einstellungsparameter führen zu unterschiedlichen Energieerträgen. Somit wird vorgeschlagen, dass Datensätze erstellt werden, die zumindest Informationen zu Windrichtung, Windgeschwindigkeit und Azimut sowie Leistung der Windkraftanlage enthalten. Ferner kann beispielsweise der Pitch mitgespeichert werden. Solche Datensätze werden für die unterschiedlichsten Wetterbedingungen mit den unterschiedlichsten Einstellungsparametern gespeichert. Anschließend kann bei einer prognostizierten Wetterlage überprüft werden, ob für eine prognostizierte Windgeschwindigkeit bei einer prognostizierten Windrichtung bereits Datensätze vorhanden sind. Sind diese vorhanden, können diese ausgewertet werden, indem die darin gespeicherten Einstellungsparameter mit den jeweiligen Leistungen der Windkraftanlagen ermittelt werden. Anhand dieser Daten ist es möglich, zu ermitteln, wie der Energieertrag einer Windkraftanlage sich verändert, wenn bei prognostizierten Wetterbedingungen Einstellungsparameter variiert werden. Dies erlaubt es, einen Energieertrag für einen bestimmten Zeitraum zu prognostizieren. Eine größere Variationsvielfalt für die Einstellungsparameter ergibt sich jedoch bei der genannten Simulation, da bei dem Rückgriff auf historische Daten natürlich solche vorliegen müssen.

Gemäß einem Ausführungsbeispiel wird vorgeschlagen, dass die prognostizierten Wetterdaten für verschiedene zeitliche Intervalle erfasst werden und dass die Energieerträge für jeweils eines dieser Intervalle berechnet werden. Eine Auflösung des Energieertrags in kleinere Intervalle erlaubt es, für jedes dieser Intervalle einen Energieertrag zu ermitteln und mögliche Einstellungsparameter zu simulieren.

Darüber hinaus ist es möglich, dass bei bestimmten Wetterbedingungen in besonders materialschonender Weise ein bestimmter Energieertrag möglich ist. Ein gleicher Energieertrag ist auch bei anderen Einstellparametern eventuell möglich, führt jedoch zu einem höheren Verschleiß. Zur Zielwerterreichung innerhalb des Zeitraums reicht es aus, wenn innerhalb des Zeitraums der Gesamtenergieertrag dem Zielwert angenähert ist. So kann es vorteilhaft sein, bei besonders starken Winden den Energieertrag innerhalb dieses Intervalls zu reduzieren und bei mäßigem Wind diesen zu maximieren, um am Ende des Zeitraums den gewünschten Zielwert zu erreichen und gleichzeitig besonders materialschonend die Windkraftanlagen betrieben zu haben.

Gemäß einem Ausführungsbeispiel wird vorgeschlagen, dass bei der Berechnung des Energieertrags der Windkraftanlage innerhalb des Zeitraums Leistungsgrenzen und/oder Wartungsleerläufe berücksichtigt werden. Innerhalb eines Zeitraums ist es denkbar, dass durch die Windkraftanlage eine Leistung erzeugt wird, die über der Leistungsgrenze des Netzes liegt. Insbesondere bei dem Betrieb eines Windparks kann dies der Fall sein, wenn besonders starker Wind weht. Solche Leistungsgrenzen müssen beachtet werden. Somit können die Energieerträge nicht beliebig gesteigert werden, wenn die Leistungsgrenze erreicht wird. Bei der Prognose des Energieertrags sind solche Leistungsgrenzen zu berücksichtigen. Andererseits können Wartungsleerläufe auftreten, die aufgrund von geplanten Wartungen unvermeidbar sind. Solche Leerläufe müssen ebenfalls berücksichtigt werden, um den Gesamtenergieertrag einer Windkraftanlage möglichst exakt für einen bestimmten Zeitraum bestimmen zu können.

Wie Eingangs bereits erläutert, ist es teilweise notwendig, den Energieertrag im Voraus dem Netzbetreiber anzugeben. Die elektrische Energie wird dann an der Strombörse gehandelt. Die so gehandelte elektrische Energie muss aber auch zur Verfügung gestellt werden. Somit besteht die Notwendigkeit, bei einem im Voraus angegebenen Zielwert diesen auch möglichst exakt zu erreichen.

Gemäß einem Ausführungsbeispiel wird vorgeschlagen, dass der Energieertrag einer Mehrzahl von Windkraftanlagen innerhalb des Zeitraums berechnet wird, wobei der Energieertrag für verschiedene Sätze von Einstellungsparametern für die jeweiligen Windkraftanlagen berechnet wird. Gerade bei dem Betrieb eines Windparks ist es wichtig, Zielvorgaben zu erreichen, da diese Größenordnungen über denen einer einzelnen Windkraftanlage liegen und Vertragsstrafen somit erheblich höher sein können.

Der berechnete Energieertrag ergibt sich zu jedem Zeitpunkt aus den aktuellsten Prognosen. Beim Betrieb der Windkraftanlage innerhalb des Zeitraums stellt sich heraus, ob der tatsächliche Energieertrag dem berechneten entspricht. Wenn, wie vorgeschlagen, der Energieertrag innerhalb des Zeitraums mehrfach mit Hilfe aktualisierter Wetterdaten und bereits erreichten Energieerträgen seit Beginn des Zeitraums errechnet wird, kann eine genauere Zielerreichung erreicht werden. Somit ist es möglich, zu überprüfen, ob der tatsächliche Energieertrag dem prognostizierten entspricht oder oberhalb/unterhalb von diesem Wert liegt. Zusätzlich können aktuellere Wetterdaten verwendet werden, um für den verbleibenden Zeitraum die Energieerträge erneut zu prognostizierten und unter Berücksichtigung des bereits erzielten Energieertrags zu optimieren. Dies führt dazu, dass neue Einstellparameter errechnet werden, die dazu beitragen, dass die Windkraftanlage den Zielwert des Energieertrags möglichst erreicht.

Gemäß einem Ausführungsbeispiel wird vorgeschlagen, dass zur Erreichung des Zielwertes des Energieertrags Einstellungsparameter für eine jeweilige Windkraftanlage innerhalb des Zeitraums verändert werden, wenn die aktualisierten Wetterdaten von den zuvor prognostizierten Wetterdaten abweichen und/oder wenn die bereits erreichten Energieerträge zu einem Zeitpunkt von den berechneten Energieerträgen für diesen Zeitpunkt abweichen. Wie bereits erläutert, können die Einstellungsparameter optimiert werden, um im verbleibenden Zeitraum bis zum Ende des bestimmten Zeitraums den Zielwert zu erreichen.

Gemäß einem Ausführungsbeispiel wird vorgeschlagen, dass die Einstellungsparameter zumindest ein Azimut und/oder ein Pitch zumindest einer Windkraftanlage umfassen.

Ein weiterer Gegenstand ist eine Windkraftanlagensteuervorrichtung mit einem Eingang eingerichtet zum Empfangen von prognostizierten Wetterdaten für einen vorbestimmten Zeitraum, einen Prozessor eingerichtet zum Berechnen eines Energieertrags der Windkraftanlage innerhalb des Zeitraums mit Hilfe der prognostizierten Wetterdaten, wobei der Energieertrag für zumindest zwei verschiedene Sätze von Einstellungsparametern der Windkraftanlage berechnet wird, und einen Vergleicher zum Vergleichen der berechneten Energieerträge mit dem Zielwert für die verschiedenen Einstellungsparametern und zum Ausgeben derjenigen Einstellungsparameter, bei denen der errechnete Energieertrag den geringsten Abstand von einem Zielwert für den Energieertrag hat.

Zu Beginn eines vorbestimmten Zeitraums sind Einstellungsparameter für die Windkraftanlage berechnet worden, mit denen mit höchster Wahrscheinlichkeit der Zielwert am besten erreicht werden wird. Diese Einstellungsparameter werden ausgegeben und die Windkraftanlage wird entsprechend eingestellt. Im Laufe des Betriebs der Windkraftanlage kann ein Abgleich erfolgen, ob die prognostizierten Energieerträge innerhalb bestimmter Intervalle erreicht werden oder nicht. Die kumulierten Energieerträge können überprüft werden und eine Justage der Einstellungsparameter kann dahingehend erfolgen, dass der Zielwert noch genauer erreicht wird.

Die zuvor genannten Verfahren können auch als Computerprogramm oder als auf einem Speichermedium gespeichertes Computerprogramm realisiert werden. Hierbei kann steuerrechnerseitig und/oder windkraftanlagenseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein

Nachfolgend wird der Gegenstand anhand einer ein Ausführungsbeispiel zeigenden Zeichnung näher erläutert. In der Zeichnung zeigen:
- Fig. 1: eine schematische Draufsicht auf eine Windkraftanlage;
- Fig. 2: eine schematische Ansicht einer Windkraftanlage;
- Fig. 3: eine schematische Draufsicht auf eine Topologie eines Windparks;
- Fig. 4: eine Ansicht der zur Berechnung des Energieertrags verwendeten Eingangsinformationen;
- Fig. 5: eine Ablaufdiagramm eines gegenständlichen Verfahrens;

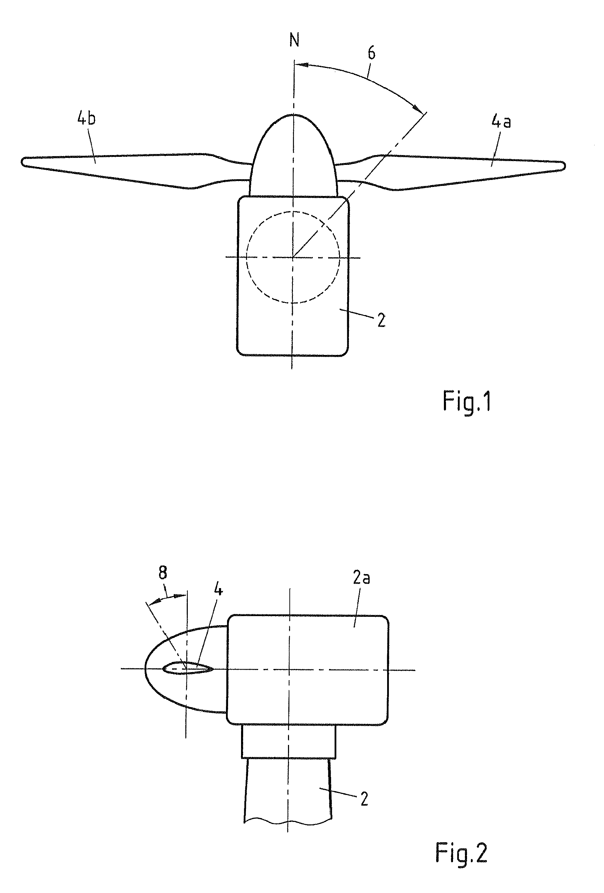

Fig. 1 zeigt eine schematische Draufsicht auf eine Gondel einer Windkraftanlage 2. An der Gondel sind Rotorblätter 4a, 4b angeordnet. Ferner ist in der Fig. 1 gezeigt, dass die Gondel der Windkraftanlage 2 um 360° drehbar um den Winkel 6 angeordnet ist. Der Winkel 6 wird auch als Azimut 6 der Windkraftanlage 2 bezeichnet. Beispielsweise kann der Winkel 6 einen Drehwinkel relativ zur Himmelsrichtung Nord darstellen. Ein Azimut 6 von 180° bedeutete dann beispielsweise, dass die Windkraftanlage 2 in Richtung Süden ausgerichtet wäre.

Fig. 2 zeigt die Gondel 2a der Windkraftanlage 2 an der die Rotorblätter 4 angeordnet sind. Zu erkennen ist, dass jedes Rotorblatt 4 in einem Winkel 8, der den Pitch des Rotorblatts 4 angibt, verschwenkt werden kann. Mit Hilfe des Winkels 8 kann der Pitch des Rotorblatts 4 eingestellt und somit die Anströmfläche des Windes auf das Rotorblatt 4 beeinflusst werden.

Der Energieertrag einer Windkraftanlage 2 ist abhängig von sowohl Azimut 6 und der Pitch 8 als auch den aktuellen Windverhältnisse an der Windkraftanlage 2.

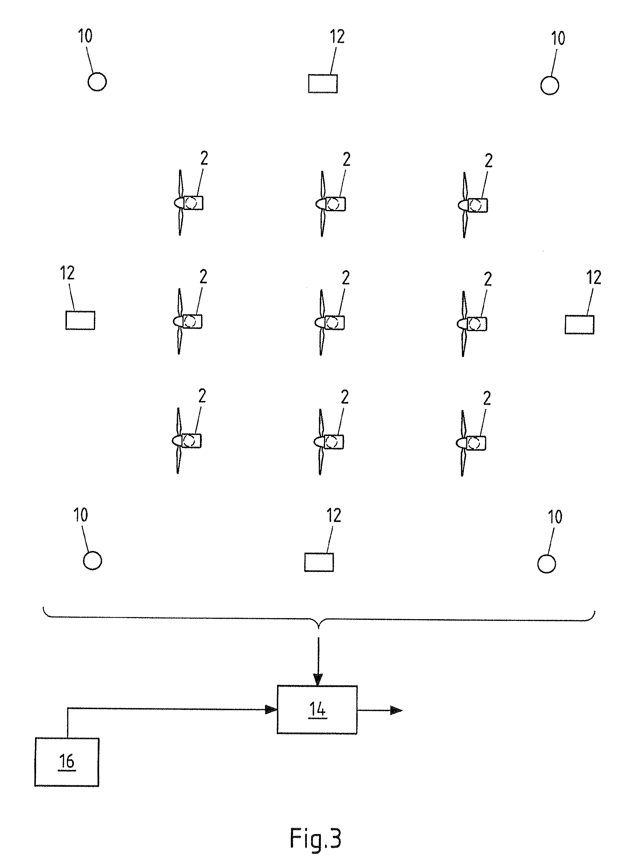

Innerhalb eines Windparks, wie er beispielsweise in Fig. 3 dargestellt ist, sind eine Vielzahl von Windkraftanlagen 2 angeordnet. Die gezeigte Anordnung ist rein schematisch.

Um die Windkraftanlagen 2 herum können meteorologische Messmasten 10 angeordnet sein. Diese sind vorzugsweise in einigen hundert Metern bis einigen Kilometern entfernt von den am äußeren Rand des Windparks angeordneten Windkraftanlagen 2 angeordnet. Ferner können Messbojen 12 vorgesehen sein, die ebenfalls entfernt von den Windkraftanlagen 2 oder auch innerhalb der Windkraftanlagen 2 angeordnet sein können.

Jede einzelne Windkraftanlage 2 misst mit einem lokalen Windmesser, z.B. einem Anemometer, die lokale Windrichtung als auch die lokale Windgeschwindigkeit. Diese lokalen Wetterdaten werden von jeder Windkraftanlage 2 an eine zentrale Steuereinrichtung 14 übermittelt. Eine Übermittlung kann dabei über Mobilfunk, Richtfunk, Ethernet oder dergleichen erfolgen.

Neben den lokalen Wetterdaten, die an den jeweiligen Windkraftanlagen 2 gemessen werden, misst jeder meteorologische Messmast 10 ebenfalls Wetterdaten, beispielsweise Windgeschwindigkeit und Windrichtung. Dies kann in verschiedenen Höhen, beispielsweise in Höhen von 10, 20, 50, 100 und 200 Meter erfolgen. Diese Angabe der Höhen ist rein beispielhaft.

Die jeweiligen an den meteorologischen Messmasten 10 erfassten meteorologischen Messwerte werden ebenfalls an die zentrale Steuereinrichtung 14 übermittelt.

Abschließend können Welleninformationen, die mittels der Bojen 12 ermittelt werden, ebenfalls als meteorologische Messdaten an die zentrale Steuereinrichtung 14 übertragen werden.

Weitere meteorologische Wetterdaten, die an die zentrale Steuereinrichtung 14 übertragen werden können, sind unter anderem Lufttemperatur, Luftfeuchte, Wassertemperatur und dergleichen. All diese Umgebungsparameter haben Einfluss auf den Energieertrag einer Windkraftanlage bei einer bestimmten Einstellung. Für jede Windkraftanlage oder auch für den Gesamtwindpark können Datensätze angelegt werden, die neben den Wetterdaten die elektrische Leistung der Windkraftanlage beinhalten. Daneben können in diesen Datensätzen die jeweilige Einstellung, insbesondere der Azimut und der Pitch der jeweiligen Windkraftanlage gespeichert sein. Somit ist es möglich, eine Vielzahl von Datensätzen zu generieren, die für bestimmte Wetterbedingungen und bestimmte Einstellungen resultierende Leistungen der Windkraftanlagen angeben.

Für eine Prognose können diese Datensätze dann durchsucht werden, indem die prognostizierten Wetterdaten mit den Wetterdaten in den Datensätzen abgeglichen werden und die Datensätze verwendet wird, die die geringste Abweichung in den Wetterdaten beinhalten. Hierbei kann eine Wichtung der Wetterdaten erfolgen, so dass Windgeschwindigkeit als höchste Priorität behandelt wird, anschließend Windrichtung und abschließend weitere Wetterdaten. Mit Hilfe einer solchen Wichtung können die Wetterdaten in den Datensätzen mit aktuellen oder prognostizierten Wetterdaten verglichen werden und die Datensätze, dessen Wetterdaten am ähnlichsten zu den aktuellen oder prognostizierten Wetterdaten sind, können verwendet werden. Dabei ist es möglich, dass eine Mehrzahl von Datensätzen verwendet werden, die mit unterschiedlichsten Einstellungsparametern gewonnen wurden. Anschließend kann aus den in den Datensätzen enthaltenen Leistungswerten ein Energieertrag für die jeweils unterschiedlichen Einstellungen berechnet werden. Somit ist es möglich, mit Hilfe historischer Informationen eine Abschätzung eines Energieertrags für eine Windkraftanlage vorzunehmen.

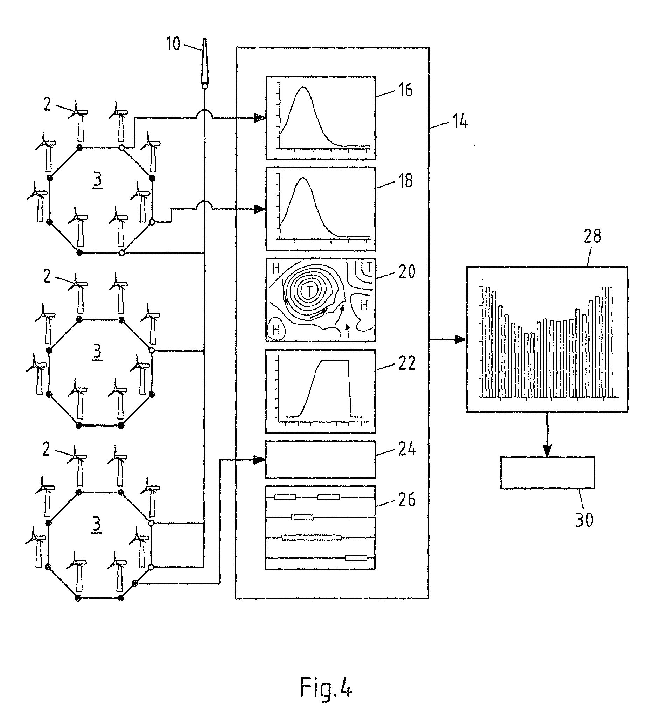

Fig. 4 zeigt schematisch eine Mehrzahl von Windkraftanlagen 2, die jeweils zu einem Ring 3 elektrisch verschaltet sind. Ferner ist ein meteorologischer Messmast 10 sowie die zentrale Steuereinrichtung 14 gezeigt.

In der zentralen Steuereinrichtung 14 kann von jeder einzelnen Windkraftanlage 2 eine Häufigkeitsverteilung 16 für Wind an der jeweiligen Windkraftanlage 2 erfasst werden. Die Häufigkeitsverteilung ist vorzugsweise eine Weibullkurve und zeigt die prozentuale Häufigkeit einer bestimmten Windgeschwindigkeit an der einzelnen Windkraftanlage 2 an. Die in jeder Windkraftanlage 2 gemessenen Wetterdaten sowie die Wetterdaten des meteorologischen Messmastes 10 können mit jeweils einer eigenen Häufigkeitsverteilung 16 erfasst werden.

Ferner ist es möglich, dass eine gemittelte Häufigkeitsverteilung 18 über alle Häufigkeitsverteilungen 16 erstellt wird, was dazu führt, dass für den Gesamtwindpark eine Häufigkeitsverteilung mit einer hohen Fehlertoleranz erstellt wird. Eine Häufigkeitsverteilung 16/18 kann für verschiedene Zeiträume, beispielsweise 24 Stunden, eine Woche, ein Monat erstellt werden. Anhand dieser Häufigkeitsverteilungen 16/18 ist es bereits möglich, eine Prognose für Wetterdaten zu erstellen. Es ist bereits mit diesen Häufigkeitsverteilungen 16/18 möglich, den Energieertrag zu prognostizierten, indem angenommen wird, dass die gemessenen Häufigkeitsverteilungen 16/18 in dem bestimmten Zeitraum tatsächlich erreicht werden und die Windkraftanlagen mit bestimmten Einstellungsparametern betrieben werden. Durch Variationen der Einstellungsparameter lässt sich bei gegebener Häufigkeitsverteilung der Energieertrag variieren, so dass dieser den Zielwert möglichst gut erreicht.

Neben den Häufigkeitsverteilungen 16 und 18 können Wetterprognosen aus Wettervorhersagen 20 entnommen werden. Diese Wettervorhersagen 20 ermöglichen es, auf einen wahrscheinlichen Wetterverlauf an einer Windkraftanlage 2 zu schließen. Dieser prognostizierte Wetterverlauf kann dazu genutzt werden, Energieerträge der einzelnen Windkraftanlagen 2 als auch des Windparks 3 zu simulieren. Hierzu können unterschiedliche Einstellungsparameter simuliert werden und überprüft werden, zu welchem Energieertrag diese führen.

Neben der Wetterprognose ist es möglich, eine Leistungskurve 22 einer einzelnen Windkraftanlage 2 zu berücksichtigen. Wie zu erkennen ist, ist mit einer Windkraftanlage 2 nur eine Maximalleistung zu erreichen. Selbst bei stärkeren Winden kann diese Maximalleistung nicht überschritten werden. Dies ist bei der Berechnung der Prognose für den Energieertrag zu berücksichtigen.

Darüber hinaus ist zu berücksichtigen, dass Netzvorgaben eine Grenze für eine Leistungseinspeisung geben. Diese Grenze 24 muss ebenfalls berücksichtigt werden.

Darüber hinaus kann der Wartungskalender 26 berücksichtigt werden, der bereits geplante Wartungen an den Windkraftanlagen 2 enthält, zu welchen Zeiten diese keine Energie erzeugen können. Diese Zeiten sind bei der Berechnung des Energieertrags zu berücksichtigen.

Unter der Berücksichtigung der verschiedenen Informationen sowie der verschiedenen Einstellungen kann die zentrale Steuereinrichtung 14 den Energieertrag prognostizieren. Diese Prognose kann beispielsweise in einer Ganglinie 28 über den Gesamtzeitraum ausgegeben werden. Hierbei können in Intervallen die jeweils vorhergesehenen Energieerträge angegeben werden und der kumulierte Energieertrag 30 kann ausgegeben werden.

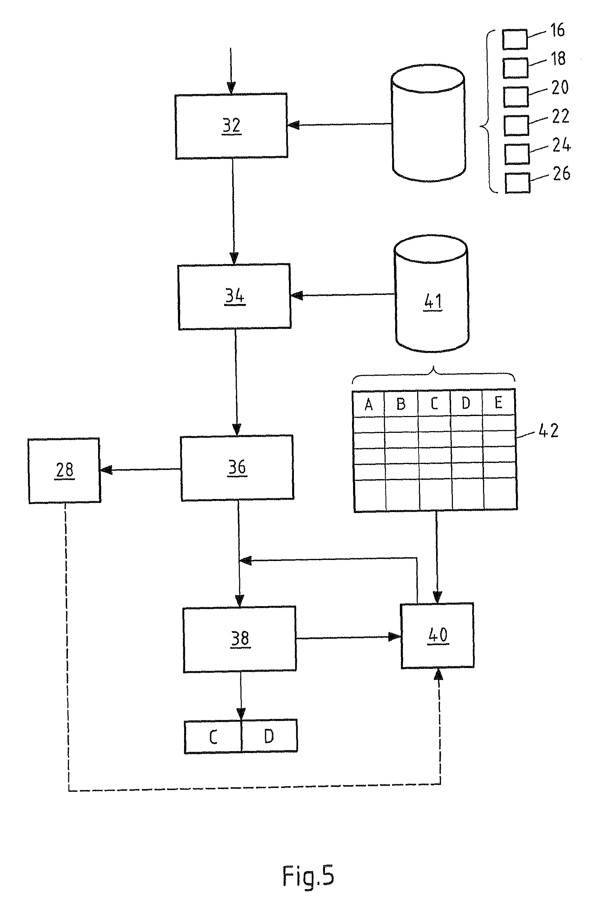

Fig. 5 zeigt ein mögliches Ablaufdiagramm eines gegenständlichen Verfahrens.

In einem ersten Schritt 32 wird ein Zeitraum bestimmt, für den eine Prognose eines Energieertrags abgegeben werden soll. Dies bedeutet, dass bestimmt werden soll, wie viel elektrische Energie während des Zeitraums in das Stromnetz eingespeist werden soll. Nachdem der Zeitraum bestimmt wurde, werden prognostizierte Wetterdaten für diesen Zeitraum erfasst. Diese prognostizierten Wetterdaten können unter anderem die Häufigkeitsverteilungen 16 und 18 sein. Darüber hinaus kann eine Wettervorhersage 20 eingelesen werden. Neben den prognostizierten Wetterdaten werden Randparameter eingelesen, die Einfluss auf den Energieertrag haben. Zu diesen Randparametern kann eine Leistungskurve 22 einer Windkraftanlage 2 gehören. Auch können Leistungsgrenzen 24 sowie Wartungspläne 26 als äußere Randparameter eingelesen werden, die Einfluss auf den Energieertrag innerhalb des vorbestimmten Zeitraums haben.

Der vorbestimmte Zeitraum kann dabei beispielsweise der nächste Tag oder die nächste Woche sein. Andere Zeiträume sind ebenfalls möglich. Ein Zeitraum kann beispielsweise eine halbe Stunde, eine Stunde, mehrere Stunden, ein Tag, eine Woche oder dergleichen sein. Innerhalb des Zeitraums ist es auch möglich, dass die zeitliche Auflösung des Energieertrags in Intervallen erfolgt, so kann beispielsweise bei einem Zeitraum von einer Stunde eine Auflösung des Energieertrags in 10-Minuten Schritten erfolgen.

Nachdem in dem Schritt 32 zumindest die prognostizierten Wetterdaten und Randparameter geladen wurden, wird in dem Schritt 34 ein möglicher Energieertrag berechnet. Hierzu können zum Einen Simulationsprogramme verwendet werden, die die Windkraftanlage 2 bzw. den gesamten Windpark 3 simulieren und dabei simulieren, wie sich der Energieertrag bei veränderten Einstellungen von Azimut und Pitch jeder einzelnen Windkraftanlage 2 innerhalb des Windparks 3 verändert. Mit Hilfe der Simulation ist es möglich, die verschiedensten Szenarien unterschiedlichster Einstellungen der Windkraftanlagen 2 durchzuspielen.

Kumulativ oder alternativ hierzu ist es möglich, auf historische Datensätze 42 zurückzugreifen. Diese historischen Datensätze 42 können in einer Datenbank 41 gespeichert sein. Ein Datensatz 42 kann aus mehreren Datenfeldern A-E gebildet sein. In den Datenfeldern A-E können Informationen zu Wetterdaten und Einstellungsparametern mit den entsprechenden Leistungen der jeweiligen Windkraftanlagen 2 gespeichert sein. Historische Daten 42 können für jedes einzelne Windrad 2 als auch für den Windpark 3 gespeichert sein. In einem Datensatz kann ein erster Wert A eine Information zu einer Windrichtung enthalten. Ein zweiter Wert B kann eine Information zu einer Windgeschwindigkeit enthalten. Ein dritter Wert C kann eine Information zu einem Azimut einer Windkraftanlage 2 enthalten. Ein vierter Wert D kann eine Information zu dem Pitch der entsprechenden Windkraftanlage 2 enthalten. Schließlich kann ein Wert E die elektrische Leistung der Windkraftanlage 2 bei den Bedingungen, wie sie in den Werten A bis D angegeben sind, angeben.

Somit können für die verschiedensten Variationen von Werten A bis D elektrische Leistungen der Windkraftanlagen 2 erfasst werden. Aus den historischen Datensätzen 42 kann derjenige Datensatz entnommen werden, der hinsichtlich der Werte a und b den prognostizierten Wetterdaten am nächsten kommt. Mit Hilfe der Information über die elektrische Leistung und der Information über den Zeitraum lässt sich der Energieertrag abschätzen. Mit Hilfe des abgeschätzten Energieertrags ist es möglich, in einem Schritt 36 einen Zielwert 28 auszugeben. Dieser kann entweder ein einzelner Wert 30 sein oder ein Verlauf des Energieertrags über den gesamten Zeitraum.

Anschließend wird in dem Schritt 38 der ermittelte Einstellwert für Azimut und Pitch mit den Werten C und D ausgegeben. Dies können die Werte aus den historischen Angaben sein und/oder simulierte Werte. Die Windkraftanlage 2 wird dann mit den Einstelldaten C und D betrieben. In Intervallen, beispielsweise alle fünf Minuten, alle zehn Minuten, jede halbe Stunde, jede Stunde, kann eine Überprüfung 40 erfolgen, wie groß der Energieertrag seit Beginn des Zeitraums war. Dieser erreichte Energieertrag kann verglichen werden mit den prognostizierten Energieertrag 28. Ferner können aktualisierte Wetterprognosen eingelesen werden und anhand dieser kann eine Neuberechnung der Einstellparameter erfolgen, wenn der Zielwert 28 mit geänderten Einstellparametern besser erreicht werden kann.

Diese geänderten Einstellwerte werden wiederum in Schritt 38 ausgegeben und es erfolgt eine erneute Überprüfung 40 des bereits erzielten Energieertrags.

Somit wird im Verlauf des Zeitraums stetig überprüft, ob die Zielwerterreichung möglich ist und gegebenenfalls werden Einstellparameter verändert, um den Energieertrag der Windkraftanlage 2 zu variieren. Hierbei ist es möglich, auf veränderte Wetterprognosen einzugehen und diese bei der Berechnung der Einstellparameter zu berücksichtigen.

Mit Hilfe des gezeigten Verfahrens ist es möglich, einen Energieertrag bei prognostizierten Wetterdaten zu prognostizieren und Einstellparameter zu berechnen, die zur Erreichung des Energieertrags notwendig sind. Ferner ist es möglich, während der Energiegewinnung Einstellparameter zu variieren, um auf veränderte Wetterprognosen reagieren zu können. Dies führt dazu, dass die Zielwerterreichung optimiert ist.

## Patentansprüche

1. Verfahren zur Steuerung zumindest einer Windkraftanlage bei dem
- für einen vorbestimmten Zeitraum prognostizierte Wetterdaten erfasst werden,
- mit den prognostizierten Wetterdaten ein Energieertrag der Windkraftanlage innerhalb des Zeitraums berechnet wird, wobei der Energieertrag für zumindest zwei verschiedene Sätze von Einstellungsparametern der Windkraftanlage berechnet wird, und
- die Windkraftanlage mit dem Satz von Einstellungsparametern betrieben wird, bei denen der errechnete Energieertrag den geringsten Abstand von einem Zielwert für den Energieertrag hat.

2. Verfahren nach einem der vorangehenden Ansprüchen,
**dadurch gekennzeichnet, dass** die prognostizierten Wetterdaten zumindest Informationen zu einer Windgeschwindigkeit und/oder einer Windrichtung an zumindest einer Windkraftanlage umfassen.

3. Verfahren nach einem der vorangehenden Ansprüchen,
**dadurch gekennzeichnet, dass** die prognostizierten Wetterdaten aus historischen Wetterdaten ermittelt werden und/oder dass die prognostizierten Wetterdaten aus einer Wetterprognose berechnet werden.

4. Verfahren nach einem der vorangehenden Ansprüchen,
**dadurch gekennzeichnet, dass** die historischen Wetterdaten zumindest eine Häufigkeitsverteilung einer Windgeschwindigkeit an einer Windkraftanlage und/oder eine gemittelte Häufigkeitsverteilung einer Windgeschwindigkeit an einer Mehrzahl von Windkraftanlagen und/oder meteorologischen Messstationen umfassen.

5. Verfahren nach einem der vorangehenden Ansprüchen,
**dadurch gekennzeichnet, dass** der Energieertrag mit Hilfe der prognostizierten Wetterdaten für verschiedene Sätze von Einstellungsparameter simuliert wird und/oder dass Energieertrag mit Hilfe der prognostizierten Wetterdaten für verschiedene Sätze von Einstellungsparameter basierend auf historischen Energieerträgen berechnet wird.

6. Verfahren nach einem der vorangehenden Ansprüchen,
**dadurch gekennzeichnet, dass** Leistungswerte einer Windkraftanlage für einen Satz Einstellungsparameter bei jeweiligen Wetterdaten erfasst werden und dass mit Hilfe der erfassten Leistungswerte der Energieertrag für prognostizierte Wetterdaten abhängig von den Einstellungsparametern berechnet wird.

7. Verfahren nach einem der vorangehenden Ansprüchen,
**dadurch gekennzeichnet, dass** die prognostizierten Wetterdaten für verschiedene zeitliche Intervalle erfasst werden und dass die Energieerträge für jeweils eines dieser Intervalle berechnet werden.

8. Verfahren nach einem der vorangehenden Ansprüchen,
**dadurch gekennzeichnet, dass** bei der Berechnung des Energieertrags der Windkraftanlage innerhalb des Zeitraums Leistungsgrenzen des Verteilnetzes und/oder Wartungsleerläufe berücksichtig werden.

9. Verfahren nach einem der vorangehenden Ansprüchen,
**dadurch gekennzeichnet, dass** der Zielwert im Voraus ausgegeben wird.

10. Verfahren nach einem der vorangehenden Ansprüchen,
**dadurch gekennzeichnet, dass** der Energieertrag einer Mehrzahl von Windkraftanlagen innerhalb des Zeitraums berechnet wird, wobei der Energieertrag für verschiedene Sätze von Einstellungsparametern für die jeweiligen Windkraftanlagen berechnet wird.

11. Verfahren nach einem der vorangehenden Ansprüchen,
**dadurch gekennzeichnet, dass** der Energieertrag innerhalb des Zeitraums mehrfach mit Hilfe aktualisierte Wetterdaten und bereits erreichter Energieerträge seit Beginn des Zeitraums errechnet wird.

12. Verfahren nach einem der vorangehenden Ansprüchen,
**dadurch gekennzeichnet, dass** zur Erreichung des Zielwerts des Energieertrags Einstellungsparameter für eine jeweilige Windkraftanlage innerhalb des Zeitraums verändert werden, wenn die aktualisierten Wetterdaten von den zuvor prognostizierten Wetterdaten abweichen und/oder wenn die bereits erreichten Energieerträge zu einem Zeitpunkt von den berechneten Energieerträgen bis zu diesem Zeitpunkt abweichen.

13. Verfahren nach einem der vorangehenden Ansprüchen,
**dadurch gekennzeichnet, dass** die Einstellungsparameter zumindest einen Azimut und/oder einen Pitch zumindest einer Windkraftanlage umfassen.

14. Windkraftanlagensteuervorrichtung mit,
- einem Eingang eingerichtet zum Empfangen von prognostizierten Wetterdaten für einen vorbestimmten Zeitraum,
- einem Prozessor eingerichtet zum Berechnen eines Energieertrags der Windkraftanlage innerhalb des Zeitraums mit Hilfe der prognostizierten Wetterdaten, wobei der Energieertrag für zumindest zwei verschiedene Sätze von Einstellungsparametern der Windkraftanlage berechnet wird, und
- einem Vergleicher zum Vergleichen der berechneten Energieerträge mit dem Zielwert für die verschiedenen Einstellungsparameter und zum Ausgeben derjenigen Einstellungsparameter, bei denen der errechnete Energieertrag den geringsten Abstand von einem Zielwert für den Energieertrag hat.
